# FASCICULE DE BREVET EUROPEEN

(11) **EP 3 584 713 B1**
(45) Date de publication et mention de la délivrance du brevet: **19.04.2023**
(21) Numéro de dépôt: 19180056.4
(22) Date de dépôt: 13.06.2019
(51) Int. Cl.: G06F 13/40, G06F 1/26, G06F 1/16

(54) **MODULE ET PROCEDE DE DETECTION DE PRESENCE D'UN TERMINAL DE PAIEMENT ELECTRONIQUE SUR UN SOCLE D'ACCUEIL, SOCLE D'ACCUEIL CORRESPONDANT**
MODUL UND VERFAHREN ZUR PRÄSENZERKENNUNG EINES ELEKTRONISCHEN ZAHLUNGSENDGERÄTS AUF EINER HOST-BASIS, ENTSPRECHEND HOST-BASIS
MODULE AND METHOD FOR DETECTING THE PRESENCE OF AN ELECTRONIC PAYMENT TERMINAL ON A HOST BASE, CORRESPONDING HOST BASE

(30) Priorité: 18.06.2018 FR 1855338
(43) Date de publication de la demande: 25.12.2019
(73) Titulaire: Banks and Acquirers International Holding, 75015 Paris (FR)
(72) Inventeur: GOULON, Maxime, 26300 Chatuzange-Le-Goubet (FR); LEBONNOIS, Etienne, 26730 La Baume d'Hostun (FR)
(74) Mandataire: Vidon Brevets & Stratégie

(56) Documents cités:
- CN-A- 106 598 189
- US-A1- 2002 156 949
- US-A1- 2014 218 045
- US-A1- 2018 143 931

## Description

### 1. Domaine technique

La présente invention concerne un système comprenant un terminal mobile et un socle d'accueil de ce terminal. Plus particulièrement, l'invention vise notamment à assurer la détection de la présence du terminal sur son socle.

La présente invention s'applique plus particulièrement à un terminal de paiement électronique mobile, noté terminal de paiement électronique, et un socle d'accueil de ce terminal de paiement électronique, appelé également base de chargement ou d'alimentation.

L'invention s'applique toutefois plus généralement à tout système comprenant un terminal mobile et un socle d'accueil correspondant.

### 2. Art Antérieur

Il est connu, et rappelé ici de façon simplifiée, qu'un terminal de paiement électronique mobile comprend un boîtier contenant, à l'intérieur de celui-ci, au moins une carte électronique reliée à divers composants périphériques assurant le fonctionnement du terminal.

En outre, l'alimentation électrique du terminal est assurée par une ou plusieurs batteries d'alimentation disposées à l'intérieur du boîtier.

Un tel terminal de paiement électronique mobile est habituellement fourni avec un socle d'accueil pouvant être relié à un ordinateur par le biais d'une liaison filaire, par exemple selon la norme USB, pour "Universal Serial Bus" en terminologie anglo-saxonne, ou RS232, ou les deux. Un tel socle permet notamment de fournir de l'énergie électrique au terminal, par exemple pour recharger ses batteries d'alimentation. Un tel socle permet également d'échanger des informations avec le terminal, par le biais d'un connecteur, pourvu de contacts, présent sur le terminal et configuré pour coopérer avec un connecteur du socle via des contacts complémentaires, dits contacts de réception. Ainsi, lorsque le terminal de paiement électronique est correctement positionné sur son socle, les contacts du terminal de paiement électronique viennent s'appuyer contre les contacts de réception du socle de manière à établir une liaison électrique entre le socle et le terminal de paiement électronique.

Les terminaux de paiement électronique existants présentent en général quatre contacts destinés à coopérer avec les contacts de réception du socle, dont deux sont utilisés pour recharger la ou les batteries du terminal de paiement électronique mobile et deux pour échanger des données avec le terminal de paiement électronique. Pour permettre cet échange de données, le socle comprend par exemple un ou plusieurs processeurs et peut donc traiter les données reçues du terminal de paiement électronique, ou simplement les transmettre à l'ordinateur qui lui est relié, via les connexions de communication présentes sur le socle lui-même.

Il existe plusieurs techniques permettant de détecter la présence d'un terminal de paiement électronique sur son socle d'accueil, et notamment des techniques basées sur un dialogue entre le socle d'accueil et le terminal de paiement électronique, par exemple via l'un des processeurs présents dans le socle.

Cependant, ces techniques nécessitent une programmation et des mises à jour logicielles du socle, qui se révèlent très contraignantes et très coûteuses.

Par ailleurs, lorsque, pour respecter certaines normes relatives aux terminaux de paiement électronique requérant que le socle d'accueil ne comprenne pas « d'intelligence », donc pas de processeur par exemple, et ne soit utilisé que pour alimenter le terminal de paiement électronique, ces techniques de détection de présence ne peuvent pas être mises en oeuvre.

Il existe également des techniques basées sur un pilotage direct du terminal de paiement électronique, par un ordinateur par exemple, qui dialogue avec le terminal de paiement électronique via une connexion de type USB. Par exemple, une de ces techniques met en oeuvre une détection de présence du terminal de paiement électronique via une détection de tension sur la ligne D+ de l'USB. Cependant, cette technique nécessite de brider la vitesse de communication USB, afin de garantir une détection de présence correcte, détériorant ainsi les performances de la liaison USB.

Il existe donc un besoin de fournir une technique qui permette de détecter la présence d'un terminal de paiement électronique sur son socle sans ressources logicielles dédiées, notamment dans les cas où le socle d'accueil ne comprend pas « d'intelligence » pour le respect de certaines normes.

Il existe également un besoin pour fournir une telle solution pouvant être fabriquée aisément et à moindre coût.

US 2002/156949 A1 divulgue un module de détection de présence couplé à un ordinateur à travers un connecteur qui comprend une broche de transmission série. Un comparateur détecte la différence entre un seuil et le signal de D-pour établir si le connecteur est en état connecté ou en état déconnecté.

### 3. Résumé de l'invention

La présente invention est définie par les revendications indépendantes jointes auxquelles il convient de se référer. Des caractéristiques avantageuses sont exposées dans les revendications dépendantes.

La présente technique propose un module de détection de présence d'un terminal de paiement électronique sur un socle d'accueil comprenant un connecteur, destiné à coopérer avec un connecteur complémentaire du terminal de paiement électronique, le connecteur du socle d'accueil comprenant au moins une broche de transmission série TX destinée à une transmission de signaux du terminal de paiement électronique vers le socle d'accueil.

Selon la technique proposée, le module de détection de présence comprend des moyens de pilotage d'au moins un module de signalisation de présence du terminal de paiement électronique sur le socle d'accueil en fonction de la tension sur la broche de transmission série TX.

Ainsi, la présente technique propose une solution nouvelle et inventive de la détection de la présence d'un terminal de paiement électronique sur son socle, en utilisant la broche TX de la liaison série.

Pour ce faire, le niveau de tension de la broche TX de la liaison série est détecté pour déterminer si le terminal de paiement électronique est présent sur son socle. En effet, selon le protocole utilisé pour la liaison série, lorsque le terminal est posé sur son socle, la tension sur la broche TX est connue, et par exemple sensiblement comprise entre -5v et -15v, selon le protocole série mis en oeuvre. Lorsque le terminal est retiré du socle, la tension est également connue, et sensiblement inférieure ou égale à 0V, selon le protocole série mis en oeuvre.

Il est donc possible, grâce à la technique proposée, de détecter la présence ou l'absence du terminal de paiement électronique sur son socle sans mettre en oeuvre de moyens logiciels, ni dans le socle, ni dans le terminal de paiement électronique, en utilisant une broche de communication destinée à une autre fonctionnalité.

Par ailleurs, l'intérêt d'utiliser la broche TX de la liaison série réside dans le fait que les signaux transitant par cette liaison sont moins rapides et moins sensibles que les autres signaux, notamment lorsque des composants électroniques sont ajoutés, en parallèle. Ainsi, les composants électroniques nécessaires à la mise en oeuvre de la présente technique n'auront pas d'impact négatif sur les signaux de la liaison série. La technique proposée permet donc de remédier aux inconvénients de certaines techniques de l'art antérieur utilisant d'autres signaux (par exemple USB) pour détecter la présence ou l'absence d'un terminal de paiement électronique sur son socle.

Enfin, la technique proposée permet de signaler la présence du terminal de paiement électronique sur sa base grâce à des moyens spécifiques de signalisation, pilotés par le module de détection.

Selon la technique proposée, les moyens de pilotage sont connectés en entrée avec la broche de transmission série TX et contrôlent la tension et/ou le courant en sortie des moyens de pilotage de sorte à
- activer le module de signalisation de présence lorsque le niveau de tension en entrée des moyens de pilotage est inférieur ou égal à un premier seuil prédéterminé, et
- désactiver le module de signalisation de présence lorsque le niveau de tension en entrée des moyens de pilotage est supérieur au premier seuil prédéterminé et inférieur ou égal à un deuxième seuil prédéterminé.

Ainsi, la technique proposée se base sur une première tension particulière sur la broche TX, significative de la présence du terminal de paiement électronique sur son socle d'accueil, qu'une communication série soit en cours ou non entre le terminal de paiement électronique et un dispositif hôte (par l'intermédiaire du socle).

Par exemple, le premier seuil correspond à un niveau de tension sensiblement égal à -5V, ou -4,5V selon les composants utilisés et le protocole série utilisé, car, lorsque le terminal de paiement électronique est sur son socle, au repos (sans communication sur la liaison série), ou lorsqu'un « 1 » logique est transmis, la tension sur la broche TX est inférieure à -5V (sensiblement comprise entre -15V et -5V).

Ainsi, lorsque le terminal de paiement électronique n'est pas sur son socle, la tension sur la broche TX est sensiblement égale à 0V, ou plus largement comprise entre -5V et 0V. Le deuxième seuil correspond donc par exemple à un niveau de tension égal à 0V.

Le module de détection comprend également des moyens de filtrage du signal électrique en sortie des moyens de pilotage de sorte à maintenir désactivé le module de signalisation de présence lorsque le niveau de tension en entrée des moyens de pilotage est supérieur au deuxième seuil prédéterminé.

Ainsi, la technique proposée permet de gérer correctement les transitions (passage d'un « 1 » logique à un « 0 » logique et réciproquement) en cours de communication sur la liaison série, pendant lesquelles la tension sur la broche TX passe par 0V.

Dans ce cas, il ne faut pas qu'un retrait du terminal de paiement électronique soit détecté. Or, comme le passage par une tension sensiblement égale à celle représentative d'un retrait du terminal de paiement électronique est provisoire en cours de communication (les « 1 » et les « 0 » logiques se suivent), il est possible de faire en sorte qu'un tel passage par 0V ne puisse pas activer le module de signalisation d'absence du terminal de paiement électronique.

De cette manière, la technique proposée permet d'éviter un enchaînement rapide d'activation/désactivation du module de signalisation de présence, pendant une communication série. Ainsi, pendant une communication série, le module de détection maintient activé le module de signalisation de présence, même lorsque des « O » sont échangés et que la tension passe en positif.

Selon un aspect particulier, le module de détection comprend également des moyens de maintien d'une tension de repos connectés en entrée avec la broche de transmission série TX et délivrant en sortie une tension sensiblement égale à une valeur de repos prédéterminée.

Ainsi, la technique proposée permet également d'éviter toute perturbation sur la liaison série, lorsque le terminal de paiement électronique est retiré de son socle. En effet, dans ce cas, des changements du niveau de tension sur la liaison série, dus à l'absence du terminal de paiement électronique, pourraient être reçus par un dispositif hôte connecté au socle et interprétés comme des caractères parasites.

Pour ce faire, la technique proposée prévoit des moyens de filtrage du signal sur la broche TX pour maintenir un niveau de repos connu pour la liaison série en question, par exemple environ -5V pour une liaison RS232.

En effet, lorsque le terminal de paiement électronique est absent, la tension sur la broche TX est sensiblement égale ou inférieure à 0V et correspond à la tension en entrée des moyens de maintien, qui fournissent en sortie une tension sensiblement égale à -5V. Ceci est effectif même lorsque la tension de 0V est due au passage d'un « 0 » logique à un « 1 » logique, ou réciproquement, pendant une transmission sur la liaison série. En effet, lors d'une communication, le passage par 0V étant quasi instantané, le signal ne se trouve pas déformé.

Pour toutes les autres tensions d'entrée des moyens de maintien, ces derniers n'ont aucune action et il n'y a pas de modification de la tension en sortie.

Ainsi, les moyens de pilotage contrôlent la tension et/ou le courant en sortie des moyens de pilotage de sorte à
- activer au moins un module de signalisation d'absence lorsque le niveau de tension en entrée des moyens de pilotage est inférieur ou égal à un deuxième seuil prédéterminé, et
- désactiver le module de signalisation d'absence lorsque le niveau de tension en entrée des moyens de pilotage est inférieur à un premier seuil prédéterminé.

Ainsi, la technique proposée permet également de piloter un module de signalisation du retrait du terminal de paiement électronique de son socle, de manière complémentaire à la signalisation de sa présence.

De ce fait, le module de signalisation d'absence est activé lorsque le module de signalisation de présence est désactivé et le module de signalisation d'absence est désactivé lorsque le module de signalisation de présence est activé.

Par exemple, le module de signalisation de présence correspond à au moins une diode électroluminescente.

Selon un aspect particulier de l'invention, le module de signalisation d'absence correspond à au moins une diode électroluminescente.

Ainsi, ces modes de réalisation permettent une visualisation de la présence ou non du terminal de paiement électronique, et permettent notamment de détecter, visuellement (par exemple par le commerçant ou un utilisateur du terminal de paiement électronique) si le terminal de paiement électronique est mal positionné sur son socle d'accueil. Cela permet par exemple d'éviter qu'il ne se charge pas alors qu'il a été positionné sur son socle dans le but de se recharger, ou bien de comprendre rapidement pourquoi une transaction échoue alors que le terminal de paiement électronique est sensé être en mode de fonctionnement et de communication via son socle.

La présente technique concerne également un socle d'accueil comprenant un module de détection de présence tel que décrit précédemment, selon les différents modes de réalisation.

La technique proposée concerne également un procédé de détection de présence d'un terminal de paiement électronique sur un socle d'accueil comprenant un connecteur, destiné à coopérer avec un connecteur complémentaire dudit terminal de paiement électronique, le connecteur du socle d'accueil comprenant au moins une broche de transmission série TX destinée à une transmission de signaux du terminal de paiement électronique vers le socle d'accueil. Le module de détection tel que décrit précédemment est notamment apte à mettre en oeuvre le procédé de détection de présence, lequel comprend une étape de pilotage d'au moins un module de signalisation de présence du terminal de paiement électronique sur le socle d'accueil en fonction du niveau de la tension sur la broche de transmission série TX.

### 4. Dessins

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1a et 1b illustrent un exemple de module de détection de présence selon deux variantes d'un premier mode de réalisation de la technique proposée ;
- les figures 2a et 2b illustrent un exemple de module de détection de présence selon deux variantes d'un deuxième mode de réalisation de la technique proposée ;
- les figures 3a et 3b illustrent un exemple de module de détection de présence selon deux variantes d'un troisième mode de réalisation de la technique proposée ;

### 5. Description

Par souci de clarté, de mêmes éléments ont été désignés par de mêmes références sur les différentes figures.

### 5.1. Principe général

Le principe général de la technique proposée repose sur la détection du niveau de tension sur la broche TX de transmission série d'un connecteur d'un socle d'accueil d'un terminal de paiement électronique pour détecter la présence du terminal de paiement électronique sur son socle.

En effet, le niveau de tension sur la broche TX de transmission série peut être considéré comme représentatif à la fois du signal transmis, « 0 » ou « 1 » logique, mais également de l'absence du terminal de paiement électronique sur son socle.

Par exemple, pour une liaison série selon le protocole de communication RS232, un niveau logique « 0 » est représenté par une tension connue sensiblement comprise entre +5V et +15V, alors qu'un niveau logique « 1 » est représenté par une tension connue sensiblement comprise entre -15V et -5V. Ainsi, il est possible de détecter si le terminal de paiement électronique est sur son socle lorsque le niveau de la tension sur la broche TX est détecté dans les intervalles précités.

De plus, lorsque le terminal de paiement électronique est sur son socle mais qu'aucune communication série n'est en cours, le niveau de repos de la liaison série correspond à un niveau logique « 1 » et est représenté par une tension connue sensiblement égale à -5V.

Enfin, lorsque le terminal de paiement électronique est absent de son socle, le niveau de la tension sur la broche TX est sensiblement égal à 0V (et aucune communication ne peut avoir lieu).

La technique proposée prend donc ces paramètres en considération pour assurer la détection de la présence d'un terminal de paiement électronique sur son socle d'accueil, de façon matérielle. En effet, la technique proposée ne nécessite pas d'implémentation logicielle, ni dans le terminal de paiement électronique ni dans le socle.

De plus, comme décrit ci-après en relation avec les différents modes de réalisation, les composants électroniques qui sont avantageusement choisis pour être ajoutés au circuit électronique du socle d'accueil, permettent également d'éviter de détériorer ou d'impacter la fonctionnalité principale de la broche TX de la liaison série consistant à faire transiter un signal du terminal de paiement électronique vers un dispositif distant, noté hôte, via le socle d'accueil. Ainsi, la technique proposée ne détériore pas la qualité du signal de la liaison série, contrairement à certaines techniques de l'art antérieur qui ralentissaient par exemple les signaux émis via la liaison USB.

Par ailleurs, une fois la présence ou l'absence du terminal de paiement électronique détectée, la technique proposée permet également de signaler, par exemple visuellement, la présence (et/ou l'absence) du terminal de paiement électronique sur son socle, de façon matérielle, grâce à l'implantation de composants dédiés dans le socle d'accueil.

Dans la suite de la description, les composants précités sont considérés comme faisant partie d'un ensemble de composants dédiés formant un module de détection de présence d'un terminal de paiement électronique, un tel module pouvant être par exemple mis en oeuvre dans le socle d'accueil d'un terminal de paiement électronique.

Il est à noter que les exemples de composants cités ci-après ne le sont qu'à titre illustratif et que les connaissances générales de l'homme du métier lui permettent de choisir d'assembler d'autres composants dont les caractéristiques combinées permettent d'aboutir à l'effet technique escompté, à savoir détecter la présence ou l'absence d'un terminal de paiement électronique sur son socle d'accueil par détection de la tension sur la broche TX de la liaison série.

### 5.2. Description d'un premier mode de réalisation

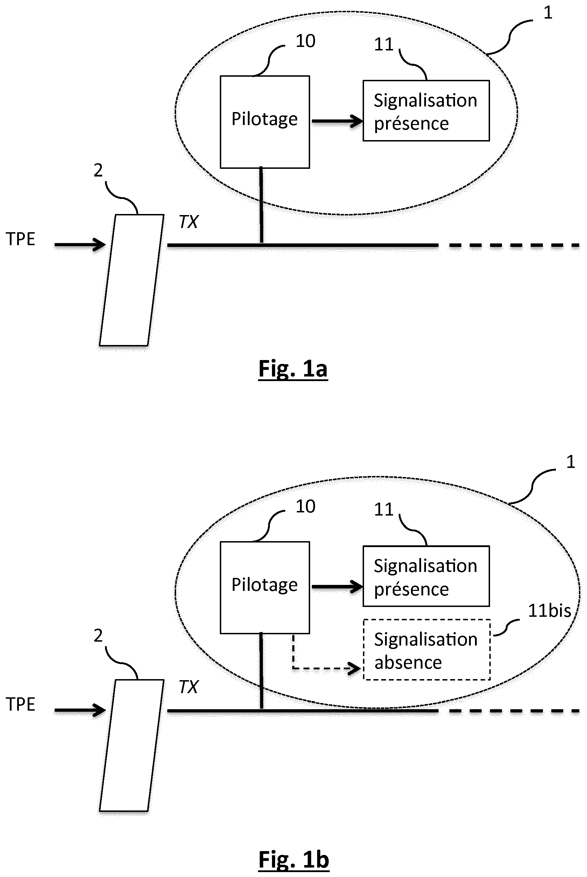

Selon le premier mode de réalisation illustré en figures 1a et 1b, le module de détection de présence 1 d'un terminal de paiement électronique (non représenté) comprend des moyens de pilotage 10 d'au moins un module de signalisation de présence 11 du terminal de paiement électronique sur son socle d'accueil (non représenté), en fonction de la tension sur la broche TX de la liaison série (par exemple RS232) via laquelle peuvent communiquer le terminal de paiement électronique et un dispositif distant, appelé hôte par la suite.

Comme déjà indiqué, cette broche TX se trouve sur un connecteur 2 du socle d'accueil, destiné à coopérer avec un connecteur complémentaire du terminal de paiement électronique (non illustré), et permet de recevoir des signaux en provenance du terminal de paiement électronique (TPE).

Les moyens de pilotage 10 sont donc connectés en entrée avec la broche de transmission série TX et, en fonction du niveau de cette tension d'entrée, les moyens de pilotage 10 contrôlent la tension et/ou le courant en sortie, de manière à piloter le module de signalisation de présence 11.

Par exemple, selon ce premier mode de réalisation, les moyens de pilotage 10 permettent
- d'activer le module de signalisation de présence 11 lorsque le niveau de tension en entrée est inférieur ou égal à un premier seuil prédéterminé, i.e. lorsque le terminal de paiement électronique est sur son socle (la liaison série étant utilisée pour une communication ou au repos) ;
- de désactiver le module de signalisation de présence 11 lorsque le niveau de tension en entrée est supérieur à ce premier seuil prédéterminé et inférieur ou égal à un deuxième seuil prédéterminé, i.e. lorsque le terminal de paiement électronique n'est pas sur son socle.

Par exemple, dans le cas d'une liaison série de type RS232, le premier seuil prédéterminé correspond donc environ à -5V, i.e. la tension maximum pour transmettre un « 1 » logique et la tension correspondant au repos sur la liaison série, ces deux états de la liaison série correspondant également à la présence du terminal de paiement électronique sur son socle.

Le cas de la transmission d'un « 0 » logique, qui correspond à une tension positive, et sensiblement supérieure à + 5V, est décrit plus en détails ci-après.

Le second seuil prédéterminé correspond donc quant à lui environ à 0V, i.e. la tension observée lorsque le terminal de paiement électronique est absent du socle.

En résumé, le terminal de paiement électronique est détecté comme présent lorsque le niveau de tension est sensiblement inférieur à -5V et il est détecté comme absent lorsque le niveau de tension est sensiblement compris entre -5V et 0V.

Ces deux seuils sont bien entendu dépendants des composants électroniques mis en oeuvre, à la fois pour la liaison série dans le connecteur du socle d'accueil mais également pour la mise en oeuvre de la technique proposée. Plus particulièrement, les deux seuils dépendent des composants utilisés pour les moyens de pilotage 10, le principe étant que les moyens de pilotage 10 puissent à la fois activer le module de signalisation de présence 11 lorsque le terminal de paiement électronique est sur son socle et désactiver le module de signalisation de présence 11 lorsque le terminal de paiement électronique n'est pas sur son socle.

Par exemple, les moyens de pilotage 10 comprennent au moins une diode Zener, qui, selon ses caractéristiques et la tension à ses broches, présente des états différents (passante, passante en inverse), et un transistor bipolaire, qui présente également un état bloqué et un état passant selon le courant qui le traverse.

En reprenant l'exemple d'une liaison série RS232, on peut par exemple implémenter les moyens de pilotage 10 avec les composants suivants :
- une résistance *R200* connectée en sortie de la branche TX ;
- une diode Zener *D200,* de tension de seuil inverse 9,1V par exemple ;
- un transistor bipolaire PNP *Z200,* dont la base est connectée à la sortie de la diode Zener, l'émetteur à une source de tension de +5V et le collecteur au module de signalisation de présence, ainsi qu'à la masse (via une résistance).

Lorsque la tension en entrée de la diode Zener est inférieure à environ -4,5V (soit le résultat du calcul suivant : 5V-9,1V+0,7V, avec 5V la tension appliquée, 9,1V la tension de seuil inverse de la diode Zener et 0,7V la tension base émetteur du transistor bipolaire), ce qui correspond soit à un état de repos de la liaison série, soit à un état de communication en cours, la diode Zener devient passante en inverse. Un courant circule donc dans la base du transistor *Z200*, qui devient donc passant et permet de piloter l'activation du module de signalisation de présence 11.

A contrario, lorsque la tension en entrée de la diode Zener est comprise entre -4.5V et 0V, ce qui correspond à une situation dans laquelle le terminal de paiement électronique n'est pas sur son socle, la diode Zener D200 n'est pas passante car la tension est inférieure à son seuil inverse de 9,1V. Il n'y a donc pas de courant dans la base du transistor *Z200*, qui est donc bloqué et n'active pas le module de signalisation de présence 11.

Dans une variante de ce mode de réalisation, illustrée en figure 1b, un module de signalisation d'absence 11bis du terminal de paiement électronique de son socle est également mis en oeuvre, piloté lui aussi par les moyens de pilotage 10 précédemment décrits.

Ainsi, lorsque le terminal de paiement électronique est retiré de son socle, ce module de signalisation d'absence 11bis est activé par les moyens de pilotage 10, et le module de signalisation de présence 11 est désactivé.

Ces deux modules de signalisation de présence 11 et de signalisation d'absence 11bis sont donc complémentaires, ou duaux, et ne peuvent pas être dans le même état activé ou désactivé en même temps.

Ainsi, dans le cas décrit ci-dessus où le terminal de paiement électronique est absent et où le transistor bipolaire est bloqué, ce dernier active en fait le module de signalisation d'absence, ce qui désactive automatiquement le module de signalisation de présence, grâce aux composants implémentés.

Selon une autre variante, non illustrée, le module de détection 1 pourrait ne pas comprendre de module de détection de présence 11 mais uniquement un module de détection d'absence 11bis.

Selon ce premier mode de réalisation de la technique proposée, le module de signalisation de présence 11 peut être mis en oeuvre via une diode électroluminescente *LED C2,* d'une couleur prédéterminée (par exemple verte). Lorsqu'il est présent (première variante), le module de signalisation d'absence 11bis peut également être mis en oeuvre par une diode électroluminescente *LED C1,* d'une autre couleur prédéterminée (par exemple rouge).

De plus, ces modules de signalisation d'absence 11bis ou de présence 11 comprennent également chacun au moins un transistor de commutation, appelés respectivement premier transistor dual *T201-1* et deuxième transistor dual *T201-2,* eux-mêmes pilotés par exemple par un autre transistor *T200* directement relié au collecteur du transistor bipolaire *Z200* des moyens de pilotage 10.

Ainsi, lorsque le transistor bipolaire *Z200* des moyens de pilotage 10 est passant, il bloque le transistor *T200,* ce qui entraine également le blocage du premier transistor dual *T201-1* et éteint la diode électroluminescente rouge *LED C1.* De ce fait, le deuxième transistor dual *T201-2* devient passant et la diode électroluminescente verte *LED C2* s'allume, pour signaler la présence du terminal de paiement électronique.

A l'inverse, lorsque le transistor bipolaire *Z200* des moyens de pilotage 10 se bloque et le transistor *T200* devient alors passant, ce qui commute le premier transistor dual *T201-1* et allume la diode électroluminescente rouge *LED C1,* signalant ainsi l'absence du terminal de paiement électronique. De ce fait, le deuxième transistor dual *T201-2* se bloque et la diode électroluminescente verte *LED C2* s'éteint.

Les cas décrits ci-dessus montrent donc que la technique proposée permet de détecter la présence du terminal de paiement électronique lorsque la liaison série est au repos ou en cours de communication et de détecter le retrait du terminal de paiement électronique.

En revanche, une autre situation doit également être étudiée attentivement : lorsque le terminal de paiement électronique est présent et qu'un « 0 » logique est transmis sur la liaison série, car dans ce cas, la tension sur la broche TX est positive et comprise sensiblement entre +5V et +15V, intervalle non encore envisagé pour l'instant.

En effet, cette situation pourrait être assimilée à une absence du terminal de paiement électronique de son socle, caractérisée par une tension sur la broche TX positive et sensiblement égale à 0V. Ainsi, lorsqu'un « 0 » logique serait transmis sur la liaison série, les moyens de pilotage détecteraient une absence du terminal de paiement électronique et désactiveraient le module de signalisation de présence (et activeraient le module de signalisation d'absence dans le cas de la variante décrite ci-dessus).

Dans l'exemple décrit ci-dessus, ceci aurait pour effet d'éteindre la diode électroluminescente verte *LED C2,* et, dans la variante, d'allumer la diode électroluminescente rouge *LED C1.*

De plus, lorsqu'un « 1 » logique serait transmis, les moyens de pilotage détecteraient alors à nouveau la présence du terminal de paiement électronique, et activeraient à nouveau le module de signalisation de présence, et désactiveraient le module de signalisation d'absence dans le cas de la variante décrite ci-dessus.

Toujours dans l'exemple décrit ci-dessus, ceci aurait pour effet d'allumer la diode électroluminescente verte *LED C2,* et, dans la variante, d'éteindre la diode électroluminescente rouge *LED C1.*

Ainsi, le module de signalisation de présence passerait d'un état activé à un état désactivé selon le niveau logique transmis sur la liaison série, sans que le terminal de paiement électronique ne soit retiré de son socle, entrainant dans l'exemple décrit un clignotement de la diode électroluminescente verte.

Dans la première variante décrite, le résultat serait un clignotement des deux diodes verte et rouge, ce qui limiterait l'efficacité de la technique proposée en ne permettant pas de visualiser clairement si le terminal de paiement électronique est présent ou absent.

De ce fait, des moyens supplémentaires de filtrage sont mis en oeuvre, pour pallier cet inconvénient, comme décrit ci-après en relation avec un deuxième mode de réalisation de la technique proposée.

### 5.3. Description d'un deuxième mode de réalisation

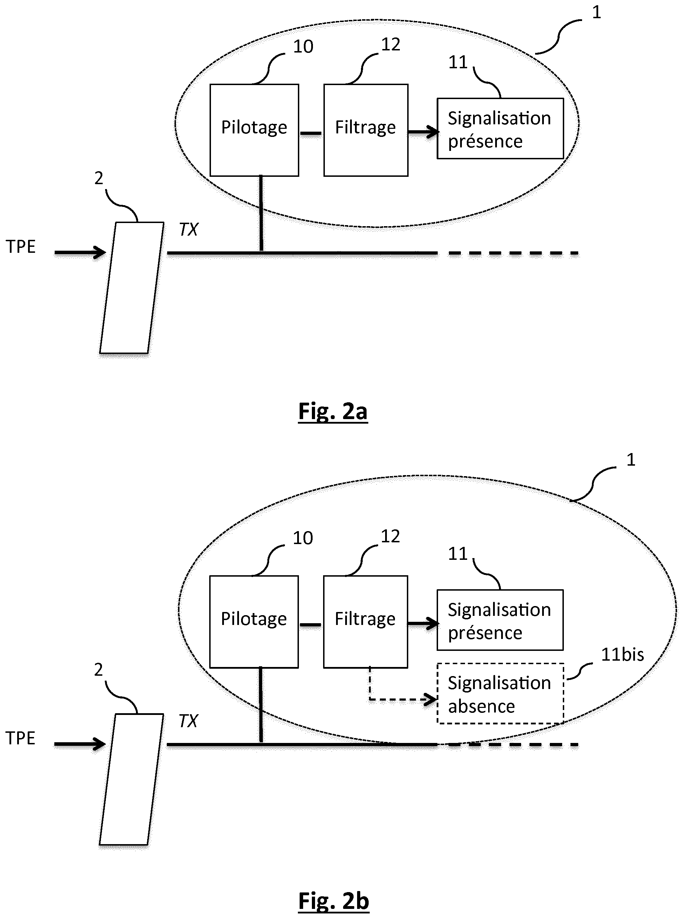

Selon ce deuxième mode de réalisation, illustré en figures 2a et 2b (correspondant à la première variante du premier mode de réalisation), des moyens de filtrage, par exemple sous la forme d'un module de filtrage 12, sont également mis en oeuvre, entre les moyens de pilotage 10 et le module de signalisation de présence 11, et, le cas échéant, entre les moyens de pilotage 10 et le module de signalisation d'absence 11bis.

Le rôle de ce module de filtrage 12 est de ne pas activer les modules de signalisation de présence et/ou d'absence lorsqu'un « 0 » logique est transmis sur la liaison série, et ainsi de ne pas signaler par erreur un retrait du terminal de paiement électronique de son socle.

En considérant le fait que le passage à une tension positive dans le cas de la transmission d'un « 0 » logique en cours de communication série est temporaire, les composants mis en oeuvre dans le module de filtrage 12 sont des composants ayant une certaine inertie de réaction, par exemple une capacité qui se charge très lentement et ne permet pas d'activer rapidement l'un ou l'autre des modules de signalisation de présence et d'absence, empêchant ainsi les diodes de changer d'état rapidement et donc de clignoter.

Par exemple, le module de filtrage 12 comprend un condensateur *C205* qui peut se décharger dans deux résistances *R202* et *R203* pour arriver à 0V.

Ainsi, dans le cas décrit ci-dessus en relation avec le premier mode de réalisation, où le terminal de paiement électronique est retiré de son socle, le transistor bipolaire *Z200* des moyens de pilotage 10 se bloque et le transistor *T200* devient alors passant, entraînant, après le temps de charge du condensateur *C205,* la commutation du premier transistor dual *T201-1* qui allume la diode électroluminescente rouge *LED C1.*

De plus, lorsque le terminal est sur son socle, la tension n'est positive que lorsque le terminal utilise le lien RS232 et transmet un « 0 ». Comme déjà indiqué ci-dessus, cet état n'étant que provisoire, le temps de charge du condensateur *C205* rend cette transition invisible pour le module de signalisation de présence 11, et le module de signalisation d'absence 11bis dans le cas de la première variante précédemment décrite. Ceci s'applique également à la deuxième variante décrite en relation avec le premier mode de réalisation, non illustrée pour ce deuxième mode de réalisation (cas où seul le module de signalisation d'absence est mis en oeuvre).

Ainsi, le deuxième transistor dual *T201-2* et, dans la variante, le premier transistor dual *T201-1,* n'ont pas le temps de commuter et donc d'agir sur l'allumage ou l'extinction des diodes concernées, évitant donc les scintillements de celles-ci.

Pour résumer, selon ce deuxième mode de réalisation, lorsque la tension sur la broche TX est supérieure à 0V, i.e. une valeur de tension correspondant au deuxième seuil prédéterminé précédemment décrit et à la transmission d'un « 0 » logique par exemple, la diode Zener *D200* est passante mais le courant dans la base du transistor *Z200* est en inverse. Le transistor *Z200* reste donc bloqué mais le module de filtrage 12 permet de ne pas allumer la diode rouge et de ne pas éteindre la diode verte lorsque le terminal de paiement électronique est sur son socle et qu'une communication est en cours, avec transmission d'un « 0 » logique.

### 5.4. Description d'un troisième mode de réalisation

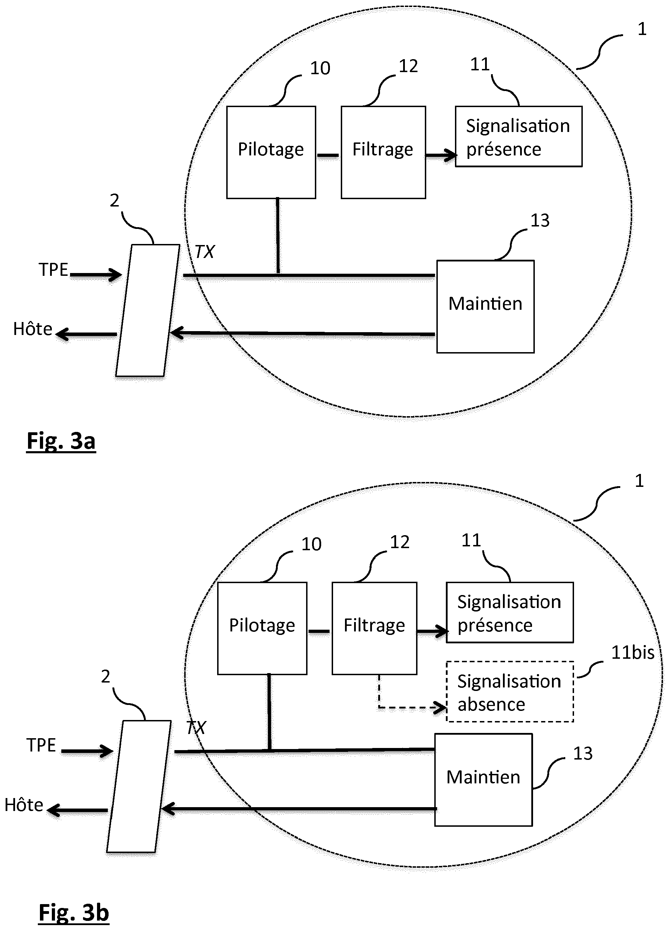

On décrit maintenant, en relation avec les figures 3a et 3b, un troisième mode de réalisation de la technique proposée, dans lequel des moyens supplémentaires sont mis en oeuvre afin d'assurer la qualité de la liaison série, même lorsque le terminal de paiement électronique est retiré de son socle d'accueil.

En effet, lorsque le terminal de paiement électronique n'est pas sur socle, la tension sur la broche TX du connecteur 2 est sensiblement égale à 0V.

Or, cette tension pourrait être interprétée comme la transmission, sur la liaison série, de caractères parasites par un dispositif hôte connecté lui aussi au socle. Dans le cas par exemple où un ordinateur distant, servant de caisse enregistreuse à un commerçant, est connecté au socle d'accueil du terminal de paiement électronique, de tels caractères parasites peuvent provoquer des erreurs de traitement du logiciel de caisse, voire même un échec de fonctionnement.

Afin d'éviter cela, la technique proposée prévoit donc la mise en oeuvre de moyens de maintien d'une tension de repos 13, connectés en entrée avec la broche de transmission série TX et délivrant en sortie une tension sensiblement égale à une valeur de repos prédéterminée.

Ainsi, pour un dispositif hôte, le retrait du terminal de paiement électronique de son socle n'est pas perturbant pour son fonctionnement.

Par exemple, ces moyens de maintien 13 comprennent une pluralité de composants électroniques permettant de délivrer une tension sensiblement égale à la valeur de tension considérée comme le niveau de repos pour la liaison série mise en oeuvre (par exemple -5V environ pour une liaison RS232) lorsque la tension sur la broche TX est égale à 0V suite au retrait du terminal de paiement électronique, tout en n'ayant aucun effet dans le cas où le terminal de paiement électronique est sur son socle.

Les connaissances de l'homme du métier lui permettant de mettre en oeuvre ces moyens de maintien 13, au vu de l'objectif recherché, les composants électroniques pouvant être utilisés, ainsi que le schéma de montage correspondant ne sont pas illustrés ni décrits plus en détails ici.

Comme illustré en figure 3b, ces moyens de maintien 13 peuvent être mis en oeuvre également dans le cas de la première variante décrite en relation avec les premier et deuxième modes de réalisation, i.e. lorsque un module de signalisation de présence 11 et un module de signalisation d'absence 11bis sont mis en oeuvre.

Ces moyens de maintien 13 peuvent être mis en oeuvre également dans le cas de la deuxième variante décrite en relation avec les premier et deuxième modes de réalisation, i.e. lorsque seul un module de signalisation d'absence est mis en oeuvre.

Par ailleurs, bien que décrits et illustrés dans le cas d'un module de détection 1 comprenant des moyens de pilotage 10 et des moyens de filtrage 12, ces moyens de maintien 13 peuvent également être mis en oeuvre dans un contexte où le module de détection 1 ne comprend pas de moyens de filtrage 12.

### 5.5. Autres caractéristiques et modes de réalisation

Les connaissances de l'homme du métier lui permettent de mettre en oeuvre les moyens décrits ci-dessus, en relation avec les différents modes de réalisation, au vu de l'objectif recherché pour chacun des moyens mis en oeuvre, i.e. le pilotage en fonction d'une valeur de tension sur la broche TX, la signalisation de présence, le filtrage et le maintien d'une tension de repos.

Les composants électroniques pouvant être utilisés, ainsi que le schéma de montage correspondant, ne sont donc pas illustrés ni décrits plus en détails ici, seuls quelques exemples ont été décrits ci-dessus.

La technique proposée concerne également un socle d'accueil comprenant un module de détection 1 de la présence d'un terminal de paiement électronique selon les différents modes de réalisation décrits ci-dessus. Ainsi, un tel socle permet de mettre en oeuvre une détection et une signalisation de la présence ou du retrait du terminal de paiement électronique, sans mise en oeuvre logicielle et sans influer sur son fonctionnement classique, notamment celui de la transmission par liaison série qui est utilisée pour la mise en oeuvre de l'invention.

Enfin, la technique proposée concerne également un procédé de détection de la présence d'un terminal de paiement électronique sur son socle d'accueil, mis en oeuvre matériellement par les moyens décrits ci-dessus dans le socle d'accueil lui-même.

## Revendications

1. Module de détection de présence (1) d'un terminal de paiement électronique sur un socle d'accueil comprenant un connecteur (2), destiné à coopérer avec un connecteur complémentaire dudit terminal de paiement électronique, ledit connecteur (2) dudit socle d'accueil comprenant au moins une broche de transmission série (TX) destinée à une transmission de signaux dudit terminal de paiement électronique vers ledit socle d'accueil, ledit module de détection de présence (1) comprenant des moyens de pilotage (10) d'au moins un module de signalisation de présence (11) dudit terminal de paiement électronique sur ledit socle d'accueil en fonction de la tension sur ladite broche de transmission série (TX), lesdits moyens de pilotage (10) étant connectés en entrée avec ladite broche de transmission série (TX) et contrôlant la tension et/ou le courant en sortie desdits moyens de pilotage (10) de sorte à
• activer ledit au moins un module de signalisation de présence (11) lorsque le niveau de tension en entrée desdits moyens de pilotage (10) est inférieur ou égal à un premier seuil prédéterminé, et
• désactiver ledit au moins un module de signalisation de présence (11) lorsque le niveau de tension en entrée desdits moyens de pilotage (10) est supérieur audit premier seuil prédéterminé et inférieur ou égal à un deuxième seuil prédéterminé, et comprenant
également des moyens de filtrage (12) dudit signal électrique en sortie desdits moyens de pilotage (10) de sorte à maintenir désactivé ledit au moins un module de signalisation de présence (11) lorsque le niveau de tension en entrée desdits moyens de pilotage (10) est supérieur audit deuxième seuil prédéterminé.

2. Module de détection de présence selon la revendication 1, comprenant également des moyens de maintien d'une tension de repos (13) connectés en entrée avec ladite broche de transmission série (TX) et délivrant en sortie une tension sensiblement égale à une valeur de repos prédéterminée.

3. Module de détection de présence selon la revendication 1, comprenant que lesdits moyens de pilotage (10) contrôlent la tension et/ou le courant en sortie desdits moyens de pilotage (10) de sorte à
• activer au moins un module de signalisation d'absence (11bis) lorsque le niveau de tension en entrée desdits moyens de pilotage (10) est inférieur ou égal audit deuxième seuil prédéterminé, et
• désactiver ledit au moins un module de signalisation d'absence (11bis) lorsque le niveau de tension en entrée desdits moyens de pilotage (10) est inférieur audit premier seuil prédéterminé.

4. Module de détection de présence selon la revendication 1, comprenant que ledit au moins un module de signalisation de présence (11) correspond à au moins une diode électroluminescente.

5. Module de détection de présence selon la revendication 3, comprenant que ledit au moins un module de signalisation d'absence (11bis) correspond à au moins une diode électroluminescente.

6. Socle d'accueil comprenant un module de détection de présence (1) selon l'une quelconque des revendications 1 à 5.

7. Procédé de détection de présence d'un terminal de paiement électronique sur un socle d'accueil comprenant un connecteur, destiné à coopérer avec un connecteur complémentaire dudit terminal de paiement électronique, ledit connecteur dudit socle d'accueil comprenant au moins une broche de transmission série (TX) destinée à une transmission de signaux dudit terminal de paiement électronique vers ledit socle d'accueil, ledit procédé de détection de présence comprenant une étape de pilotage, mise en oeuvre par des moyens de pilotage, d'au moins un module de signalisation de présence dudit terminal de paiement électronique sur ledit socle d'accueil en fonction du niveau de la tension sur ladite broche de transmission série (TX), lesdits moyens de pilotage (10) étant connectés en entrée avec ladite broche de transmission série (TX) et contrôlant la tension et/ou le courant de sorte à mettre en oeuvre les étapes suivantes :
• activation dudit au moins un module de signalisation de présence lorsque le niveau de tension en entrée desdits moyens de pilotage est inférieur ou égal à un premier seuil prédéterminé, et
• désactivation dudit au moins un module de signalisation de présence lorsque le niveau de tension en entrée desdits moyens de pilotage est supérieur audit premier seuil prédéterminé et inférieur ou égal à un deuxième seuil prédéterminé,
et comprenant également une étape de filtrage dudit signal électrique en sortie desdits moyens de pilotage de sorte à maintenir désactivé ledit au moins un module de signalisation de présence lorsque le niveau de tension en entrée desdits moyens de pilotage est supérieur audit deuxième seuil prédéterminé.

## Patentansprüche

1. Modul zur Anwesenheitserkennung (1) eines elektronischen Zahlungsendgeräts auf einem Aufnahmesockel, umfassend einen Steckverbinder (2), der dazu bestimmt ist, mit einem komplementären Steckverbinder des elektronischen Zahlungsendgerätes zusammenzuwirken, wobei der Steckverbinder (2) des Aufnahmesockels mindestens einen Stift zur seriellen Übertragung (TX) aufweist, der für eine Signalübertragung vom elektronischen Zahlungsendgerät zum Aufnahmesockel bestimmt ist,
wobei das Modul zur Anwesenheitserkennung (1) Steuermittel (10) mindestens eines Moduls zur Anwesenheitssignalisierung (11) des elektronischen Zahlungsendgerätes auf dem Aufnahmesockel in Abhängigkeit von der Spannung auf dem Stift zur seriellen Übertragung (TX) aufweist, wobei die Steuermittel (10) am Eingang mit dem Stift zur seriellen Übertragung (TX) verbunden sind und die Spannung und/oder den Strom am Ausgang der Steuermittel (10) derart steuern, um
• das mindestens eine Modul zur Anwesenheitssignalisierung (11) zu aktivieren, wenn das Spannungsniveau am Eingang der Steuermittel (10) kleiner oder gleich einem ersten vorbestimmten Schwellenwert ist, und
• das mindestens eine Modul zur Anwesenheitssignalisierung (11) zu deaktivieren, wenn das Spannungsniveau am Eingang der Steuermittel (10) größer als der erste vorbestimmte Schwellenwert und kleiner oder gleich einem zweiten vorbestimmten Schwellenwert ist,
und ferner umfassend Filtermittel (12) des elektrischen Signals am Ausgang der Steuermittel (10), derart, um das mindestens eine Modul zur Anwesenheitssignalisierung (11) deaktiviert zu halten, wenn das Spannungsniveau am Eingang der Steuermittel (10) größer als der zweite vorbestimmte Schwellenwert ist.

2. Modul zur Anwesenheitserkennung nach Anspruch 1, ferner umfassend Mittel zum Halten einer Ruhespannung (13), die am Eingang mit dem Stift zur seriellen Übertragung (TX) verbunden sind und am Ausgang eine Spannung abgeben, die im Wesentlichen gleich einem vorbestimmten Ruhewert ist.

3. Modul zur Anwesenheitserkennung nach Anspruch 1, umfassend, dass die Steuermittel (10) die Spannung und/oder den Strom am Ausgang der Steuermittel (10) derart steuern, um
• mindestens ein Modul zur Abwesenheitssignalisierung (llbis) zu aktivieren, wenn das Spannungsniveau am Eingang der Steuermittel (10) kleiner oder gleich dem zweiten vorbestimmten Schwellenwert ist, und
• das mindestens eine Modul zur Abwesenheitssignalisierung (11bis) zu deaktivieren, wenn das Spannungsniveau am Eingang der Steuermittel (10) kleiner als der erste vorbestimmte Schwellenwert ist.

4. Modul zur Anwesenheitserkennung nach Anspruch 1, umfassend, dass das mindestens eine Modul zur Anwesenheitssignalisierung (11) mindestens einer Leuchtdiode entspricht.

5. Modul zur Anwesenheitserkennung nach Anspruch 3, umfassend, dass das mindestens eine Modul zur Abwesenheitssignalisierung (11bis) mindestens einer Leuchtdiode entspricht.

6. Aufnahmesockel, umfassend ein Modul zur Anwesenheitserkennung (1) nach einem der Ansprüche 1 bis 5.

7. Verfahren zur Anwesenheitserkennung eines elektronischen Zahlungsendgeräts auf einem Aufnahmesockel, umfassend einen Steckverbinder, der dazu bestimmt ist, mit einem komplementären Steckverbinder des elektronischen Zahlungsendgerätes zusammenzuwirken, wobei der Steckverbinder des Aufnahmesockels mindestens einen Stift zur seriellen Übertragung (TX) aufweist, der für eine Signalübertragung vom elektronischen Zahlungsendgerät zum Aufnahmesockel bestimmt ist,
wobei das Verfahren zur Anwesenheitserkennung einen Schritt des Steuerns, der von Steuermitteln umgesetzt wird, von mindestens einem Modul zur Anwesenheitssignalisierung des elektronischen Zahlungsendgerätes auf dem Aufnahmesockel in Abhängigkeit vom Niveau der Spannung auf dem Stift zur seriellen Übertragung (TX) aufweist, wobei die Steuermittel (10) am Eingang mit dem Stift zur seriellen Übertragung (TX) verbunden sind und die Spannung und/oder den Strom derart steuern, um die folgenden Schritte umzusetzen:
• Aktivieren des mindestens einen Moduls zur Anwesenheitssignalisierung, wenn das Spannungsniveau am Eingang der Steuermittel kleiner oder gleich einem ersten vorbestimmten Schwellenwert ist, und
• Deaktivieren des mindestens einen Moduls zur Anwesenheitssignalisierung, wenn das Spannungsniveau am Eingang der Steuermittel größer als der erste vorbestimmte Schwellenwert und kleiner oder gleich einem zweiten vorbestimmten Schwellenwert ist,
und ferner umfassend einen Schritt des Filterns des elektrischen Signals am Ausgang der Steuermittel, derart, um das mindestens eine Modul zur Anwesenheitssignalisierung deaktiviert zu halten, wenn das Spannungsniveau am Eingang der Steuermittel größer als der zweite vorbestimmte Schwellenwert ist.

## Claims

1. Module for detecting the presence (1) of an electronic payment terminal on a receiving dock comprising a connector (2) intended to co-operate with a complementary connector of the electronic payment terminal, said connector (2) of said receiving dock comprising at least one series transmission pin (TX) intended for a transmission of signals from said electronic payment terminal to said receiving dock, said module for detecting presence (1) comprising means for driving (10) at least one module for signaling a presence (11) of said electronic payment terminal on said receiving dock as a function of the voltage on said series transmission pin (TX), said driving means (10) being connected at input with said series transmission pin (TX) and controlling the voltage and/or the current at output from said driving means so as to:
• activate said at least one presence-signaling module (11) when the level of voltage at input of said driving means (10) is lower than or equal to a first pre-determined threshold, and
• deactivate said at least one presence-signaling module (11) when the level of voltage at input of said driving means (10) is greater than the first pre-determined threshold and lower than or equal to a second pre-determined threshold,
and further comprising means for filtering (12) said electronic signal at output from said driving means (10) so as to keep said at least one presence-signaling module (11) deactivated when the level of voltage at input of said driving means (10) is greater than said second pre-determined threshold.

2. Module for detecting presence according to claim 1, further comprising means for maintaining an idle voltage (13) connected at input with said series transmission pin (TX) and delivering at output a voltage substantially equal to a pre-determined idle value

3. Module for detecting presence according to claim 1, wherein said driving means (10) control the voltage and/or the current at output of the driving means (10) so as to:
• activate at least one absence-signaling module (11bis) when the level of voltage at input of said driving means (10) is lower than or equal to said second pre-determined threshold, and
• deactivate said at least one absence-signaling module (11bis) when the level of voltage at input of said driving means (10) is smaller than said first pre-determined threshold.

4. Module for detecting presence according to claim 1, wherein said at least one presence-signaling module (11) corresponds to at least one light-emitting diode.

5. Module for detecting presence according to claim 3, wherein said at least one absence-signaling module (11bis) corresponds to at least one light-emitting diode.

6. Receiving dock comprising a presence-detecting module (1) according to any one of the claims 1 to 5.

7. Method for detecting a presence of an electronic payment terminal on a receiving dock comprising a connector, intended to co-operate with a complementary connector of said electronic payment terminal, said connector of said receiving dock comprising at least one series transmission pin (TX) intended for a transmission of signals from said electronic payment terminal to said receiving dock, said presence-detection method comprising a step, implemented by driving means, for driving at least one module for signaling the presence of said electronic payment terminal on said receiving dock as a function of the level of voltage on said series transmission pin (TX) , said driving means (10) being connected at input with said series transmission pin (TX) and controlling the voltage and/or the current so as to implement the following steps:
• activate said at least one presence-signaling module when the level of voltage at input of said driving means is lower than or equal to a first pre-determined threshold, and
• deactivate said at least one presence-signaling module when the level of voltage at input of said driving means is greater than the first pre-determined threshold and lower than or equal to a second pre-determined threshold,
and further comprising a step for filtering said electronic signal at output from said driving means so as to keep said at least one presence-signaling module deactivated when the level of voltage at input of said driving means is greater than said second pre-determined threshold.
